# EUROPEAN PATENT APPLICATION

(11) **EP 3 073 426 A1**
(43) Date of publication of application: **28.09.2016**
(21) Application number: 16160171.1
(22) Date of filing: 14.03.2016
(51) Int. Cl.: G06Q 10/06

(54) **AUTOMATION SYSTEM FOR IMPLEMENTING A STANDARDIZED DESIGN METHODOLOGY FOR A PROCESS AUTOMATION SERVICE**

(30) Priority: 27.03.2015 US 201514670889
(71) Applicant: Accenture Global Services Limited, Dublin 4 (IE)
(72) Inventor: GOEL, Nishant, 560029 Bangalore, Karnataka (IN); PODDER, Sanjay, 400607 Thane, Maharashtra (IN)
(74) Representative: Müller-Boré & Partner Patentanwälte PartG mbB

(57) **Abstract**

A system may receive process information that describes an automatable process. The process information may describe: a step of the automatable process, a stage of the automatable process, an input of the automatable process, or an output of the automatable process. The system may determine a process map, based on the process information, that describes the process information. The system may determine a preliminary automation plan, that indicates automatable steps of the automatable process, to provide an automation service based on the process map. The system may determine an implementation plan that describes a method of implementing the automation service based on the preliminary automation plan. The system may provide the implementation plan and the preliminary automation plan to permit the automation service to be delivered. The system may cause execution of the automation service by an automation device based on providing the implementation plan and the preliminary automation plan.

## Description

### BACKGROUND

A user may perform a process using a user device. Part or all of the process may be amenable to automation. An automation service provider may design and provide an automation service to automate part or all of the process.

### SUMMARY

According to some possible implementations, a system may include one or more devices to receive process information that describes an automatable process. The process information may describe at least one of: a step of the automatable process, a stage of the automatable process, an input of the automatable process, or an output of the automatable process. The system may determine a process map based on the process information. The process map may describe the process information. The system may determine a preliminary automation plan to provide an automation service based on the process map. The preliminary automation plan may indicate one or more automatable steps of the automatable process. The system may determine an implementation plan based on the preliminary automation plan. The implementation plan may describe a method of implementing the automation service based on the preliminary automation plan. The system may provide the implementation plan and the preliminary automation plan to permit the automation service to be delivered. The system may cause execution of the automation service by an automation device based on providing the implementation plan and the preliminary automation plan.

According to some possible implementations, a computer-readable medium may store instructions that cause a processor to receive process information that describes an automatable process. The one or more instructions may cause the processor to generate a process map based on the process information. The process map may describe the process information. The one or more instructions may cause the processor to determine a preliminary automation plan based on the process map. The preliminary automation plan may be a plan to provide an automation service, and may indicate one or more automatable steps of the automatable process. The one or more instructions may cause the processor to determine a preliminary implementation plan based on the preliminary automation plan. The preliminary implementation plan may describe a method of implementing the automation service based on the preliminary automation plan. The one or more instructions may cause the processor to determine a final automation plan, based on the preliminary automation plan and based on a cost associated with the preliminary automation plan, to provide the automation service. The final automation plan may be determined based on the one or more automatable steps. The one or more instructions may cause the processor to output or store the final automation plan.

According to some possible implementations, a method may include obtaining, by one or more devices, process information that describes an automatable process. The process information may describe at least one of: a step of the automatable process, a stage of the automatable process, an input of the automatable process, or an output of the automatable process. The method may include generating, by the one or more devices, a process map based on the process information. The process map may describe the process information. The method may include determining, by the one or more devices, a preliminary automation plan to provide an automation service based on the process map. The preliminary automation plan may indicate one or more automatable steps of the automatable process. The method may include determining, by the one or more devices, an implementation plan based on the preliminary automation plan. The implementation plan may describe a method of implementing the automation service based on the preliminary automation plan. The method may include outputting, by the one or more devices, the implementation plan to permit the automation service to be delivered.

### BRIEF DESCRIPTION OF THE DRAWINGS

Fig. 1 is a diagram of an overview of an example implementation described herein;
Fig. 2 is a diagram of an example environment in which systems and/or methods, described herein, may be implemented;
Fig. 3 is a diagram of example components of one or more devices of Fig. 2;
Fig. 4 is a flow chart of an example process for determining a preliminary implementation plan to implement an automation service based on a standardized method;
Figs. 5A-5F are diagrams of an example implementation relating to the example process shown in Fig. 4;
Fig. 6 is a flow chart of an example process for determining a final implementation plan to implement an automation service based on a standardized method; and
Figs. 7A-7F are diagrams of an example implementation relating to the example process shown in Fig. 6.

### DETAILED DESCRIPTION

The following detailed description of example implementations refers to the accompanying drawings. The same reference numbers in different drawings may identify the same or similar elements.

An automation provider may plan and/or deliver an automation service to automate a process. The automation provider may evaluate a process that is performed by a user and/or a user device in order to automate steps of the process. For example, the automation provider may perform solution planning by designing the automation process, building and technically testing the automation process, testing user acceptance of the automation process, and deploying the automation process based on designing, building, and testing the automation process. After deploying the automation process, the automation provider may provide services to perform and/or maintain the automation process. Implementations described herein may enable the automation provider to design, build, test, and deploy the automation process, as described in more detail below.

An automation device may determine an automation plan to automate steps of a process in order to reduce a cost of performing the process, a time required to perform the process, a number of users and/or user devices required to perform the process, or the like. A design device may determine an implementation plan to implement the automation plan. However, the automation device may not use a standardized design methodology to determine the automation plan. For example, the automation device may not determine the automation plan using an approach that is applicable across different processes, industries, and/or technologies. Further, the design device may not use a standardized design methodology to determine the implementation plan.

Implementations described herein may enable the automation device to determine the automation method using a standardized design methodology, and may enable the design device to determine the implementation plan using a standardized design methodology. The automation device may receive process information. The process information may describe stages of the process, steps included in a stage, an input and/or an output (e.g., of a stage, of a step, or of the process), whether steps of the process are automatable, security information related to the process, or the like. The automation device may determine a preliminary automation plan based on the process information. Based on the preliminary automation plan, the automation device may determine a preliminary implementation plan to implement the preliminary automation plan, and may provide the preliminary implementation plan to a design device. The design device may determine a final implementation plan based on the preliminary implementation plan, and may provide the final implementation plan to an implementation group. The implementation group may implement the final implementation plan to provide the automation service. In this way, the automation provider may determine the final implementation plan and the final automation plan using a standardized design methodology, which may aid the automation device in efficiently automating a variety of processes in a variety of technical fields.

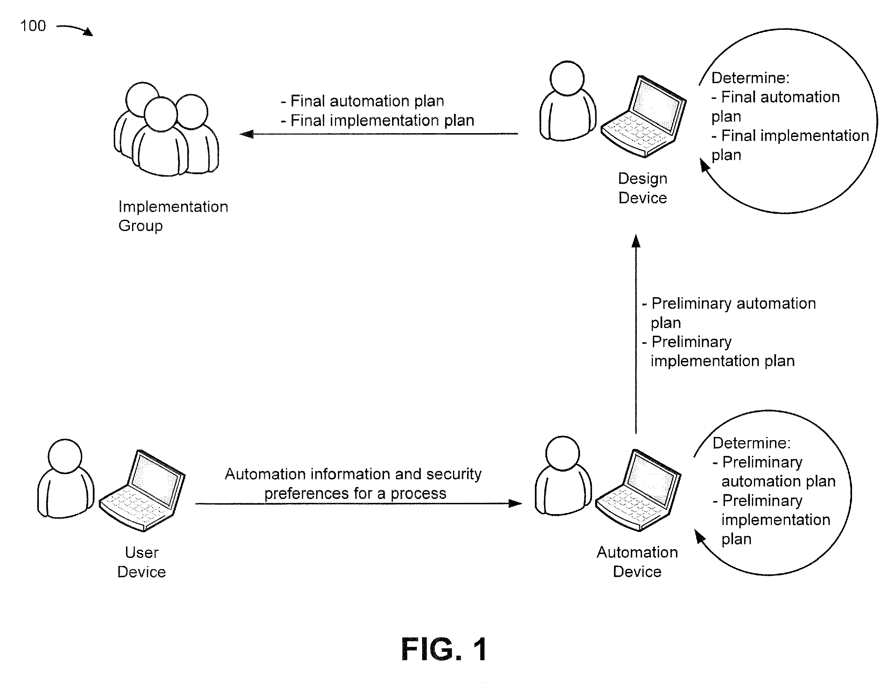

Fig. 1 is a diagram of an overview of an example implementation 100 described herein. As shown in Fig. 1, a user device may provide, to an automation device, automation information and security preferences for a process (e.g., a process performed by the user device). As shown, assume that the automation device receives the automation information and the security preferences. As further shown, assume that the automation device determines a preliminary automation plan based on the automation information, and determines a preliminary implementation plan based on the preliminary automation plan. As shown, the automation device may provide the preliminary automation plan and the preliminary implementation plan to a design device.

As further shown, the design device may determine a final automation plan. Assume that the design device determines the final automation plan based on the preliminary automation plan and the preliminary implementation plan. As shown, the design device may determine a final implementation plan based on the preliminary implementation plan and based on the final implementation plan. As shown, the design device may provide the final automation plan and the final implementation plan to an implementation group. The implementation group may implement an automation service using the final automation plan and the final implementation plan

In this way, an automation provider may determine an automation plan to automate a process based on a standardized methodology, and may determine an implementation plan to implement the automation plan using a standardized methodology. Using the standardized methodology may increase efficiency of determining the automation plan and the implementation plan across different processes, technologies, and industries.

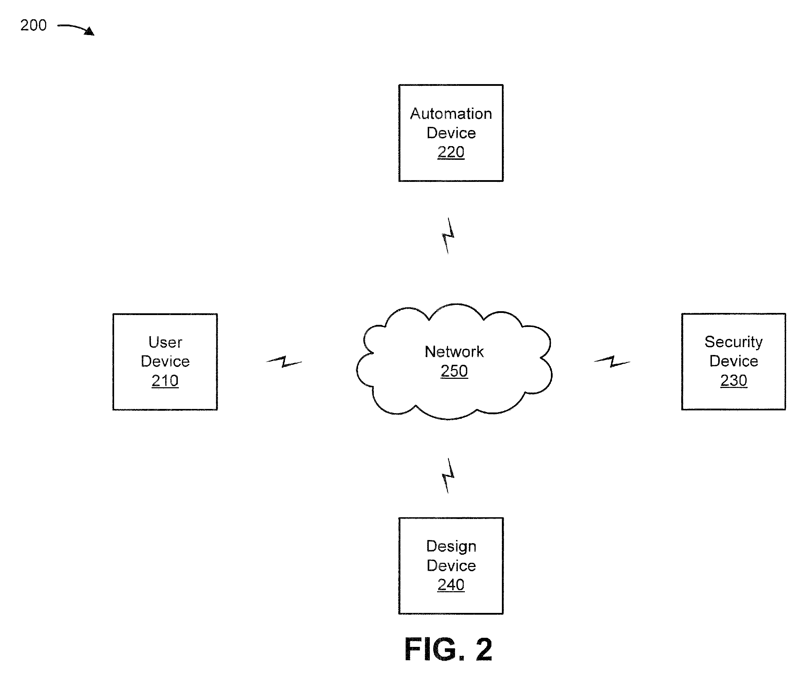

Fig. 2 is a diagram of an example environment 200 in which systems and/or methods, described herein, may be implemented. As shown in Fig. 2, environment 200 may include a user device 210, an automation device 220, a security device 230, a design device 240, and a network 250. Devices of environment 200 may interconnect via wired connections, wireless connections, or a combination of wired and wireless connections.

User device 210 may include one or more devices capable of receiving, generating, storing, processing, and/or providing information related to a process. For example, user device 210 may include a computing device, such as a desktop computer, a laptop computer, a tablet computer, a handheld computer, a mobile phone (e.g., a smart phone), or a similar type of device. In some implementations, user device 210 may perform and/or facilitate a process. For example, a user may perform one or more steps of the process by interacting with a user interface provided by user device 210. In some implementations, user device 210 may provide process information that describes an automatable process to another device, such as automation device 220. In some implementations, user device 210 may provide information to and/or receive information from security device 230 (e.g., may provide and/or receive a credential for authenticating an automation service, or the like).

Automation device 220 may include one or more devices capable of receiving, generating, storing, processing, and/or providing information related to a process. For example, automation device 220 may include a computing device, such as a desktop computer, a laptop computer, a tablet computer, a handheld computer, or a similar type of device. In some implementations, automation device 220 may receive process information (e.g., from user device 210). Automation device 220 may determine a preliminary automation plan, a preliminary implementation plan, and/or a security plan based on the process information. Automation device 220 may provide the preliminary automation plan, the preliminary implementation plan, and/or the security plan to another entity (e.g., user device 210, security device 230, an implementation group, or the like). Automation device 220 may provide an automation service to automate one or more stages and/or steps of a process performed by user device 210.

Security device 230 may include one or more devices capable of receiving, storing, generating, processing, and/or providing security information. For example, security device 230 may include a server, a gateway, a firewall, an authentication device, or the like. In some implementations, security device 230 may provide a security service to user device 210 (e.g., may facilitate a secure automation session, or the like). In some implementations, security device 230 may authenticate a user of user device 210 based on a credential, and may receive, generate, store, and/or provide the credential.

Design device 240 may include one or more devices capable of receiving, generating, storing, processing, and/or providing information related to determining a final implementation plan. For example, design device 240 may include a computing device, such as a desktop computer, a laptop computer, a tablet computer, a handheld computer, or a similar type of device. In some implementations, design device 240 may receive a preliminary implementation plan and/or a preliminary automation plan (e.g., from automation device 220). Design device 240 may determine a final implementation plan based on the preliminary implementation plan, and may determine a final automation plan based on the preliminary automation plan. Design device 240 may provide the final implementation plan and/or the final automation plan to another entity, such as an implementation group, and may provide security information to security device 230, a dedicated automation device, or another device.

Network 250 may include one or more wired and/or wireless networks. For example, network 250 may include a cellular network (e.g., a long-term evolution (LTE) network, a 3G network, a code division multiple access (CDMA) network, etc.), a public land mobile network (PLMN), a local area network (LAN), a wide area network (WAN), a metropolitan area network (MAN), a telephone network (e.g., the Public Switched Telephone Network (PSTN)), a private network, an ad hoc network, an intranet, the Internet, a fiber optic-based network, a cloud computing network, or the like, and/or a combination of these or other types of networks.

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of environment 200 may perform one or more functions described as being performed by another set of devices of environment 200.

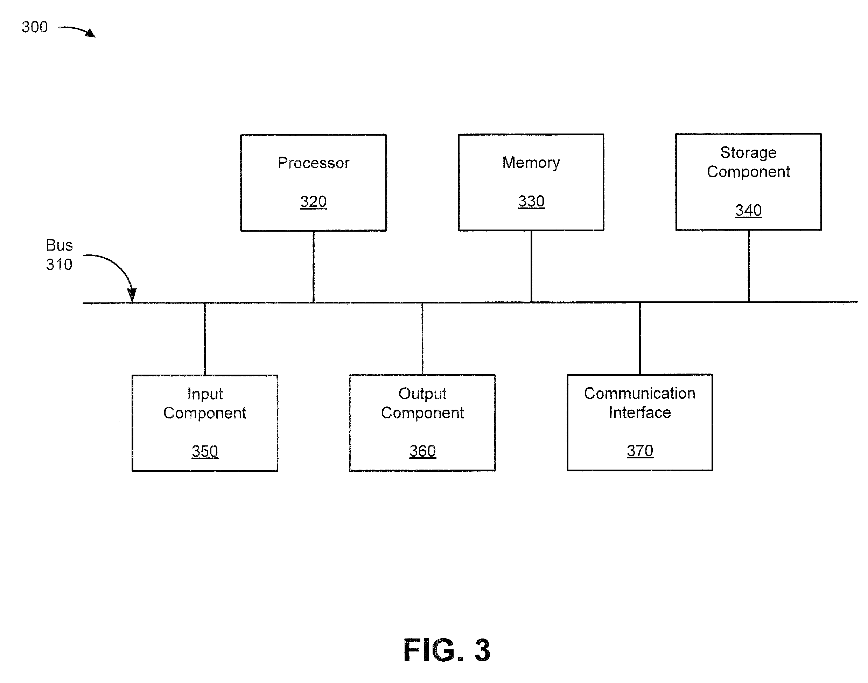

Fig. 3 is a diagram of example components of a device 300. Device 300 may correspond to user device 210, automation device 220, security device 230, and/or design device 240. In some implementations, user device 210, automation device 220, security device 230, and/or design device 240 may include one or more devices 300 and/or one or more components of device 300. As shown in Fig. 3, device 300 may include a bus 310, a processor 320, a memory 330, a storage component 340, an input component 350, an output component 360, and a communication interface 370.

Bus 310 may include a component that permits communication among the components of device 300. Processor 320 is implemented in hardware, firmware, or a combination of hardware and software. Processor 320 may include a processor (e.g., a central processing unit (CPU), a graphics processing unit (GPU), an accelerated processing unit (APU), etc.), a microprocessor, and/or any processing component (e.g., a field-programmable gate array (FPGA), an application-specific integrated circuit (ASIC), etc.) that interprets and/or executes instructions. Memory 330 may include a random access memory (RAM), a read only memory (ROM), and/or another type of dynamic or static storage device (e.g., a flash memory, a magnetic memory, an optical memory, etc.) that stores information and/or instructions for use by processor 320.

Storage component 340 may store information and/or software related to the operation and use of device 300. For example, storage component 340 may include a hard disk (e.g., a magnetic disk, an optical disk, a magneto-optic disk, a solid state disk, etc.), a compact disc (CD), a digital versatile disc (DVD), a floppy disk, a cartridge, a magnetic tape, and/or another type of computer-readable medium, along with a corresponding drive.

Input component 350 may include a component that permits device 300 to receive information, such as via user input (e.g., a touch screen display, a keyboard, a keypad, a mouse, a button, a switch, a microphone, etc.). Additionally, or alternatively, input component 350 may include a sensor for sensing information (e.g., a global positioning system (GPS) component, an accelerometer, a gyroscope, an actuator, etc.). Output component 360 may include a component that provides output information from device 300 (e.g., a display, a speaker, one or more light-emitting diodes (LEDs), etc.).

Communication interface 370 may include a transceiver-like component (e.g., a transceiver, a separate receiver and transmitter, etc.) that enables device 300 to communicate with other devices, such as via a wired connection, a wireless connection, or a combination of wired and wireless connections. Communication interface 370 may permit device 300 to receive information from another device and/or provide information to another device. For example, communication interface 370 may include an Ethernet interface, an optical interface, a coaxial interface, an infrared interface, a radio frequency (RF) interface, a universal serial bus (USB) interface, a Wi-Fi interface, a cellular network interface, or the like.

Device 300 may perform one or more processes described herein. Device 300 may perform these processes in response to processor 320 executing software instructions stored by a computer-readable medium, such as memory 330 and/or storage component 340. A computer-readable medium is defined herein as a non-transitory memory device. A memory device includes memory space within a single physical storage device or memory space spread across multiple physical storage devices.

Software instructions may be read into memory 330 and/or storage component 340 from another computer-readable medium or from another device via communication interface 370. When executed, software instructions stored in memory 330 and/or storage component 340 may cause processor 320 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

The number and arrangement of components shown in Fig. 3 are provided as an example. In practice, device 300 may include additional components, fewer components, different components, or differently arranged components than those shown in Fig. 3. Additionally, or alternatively, a set of components (e.g., one or more components) of device 300 may perform one or more functions described as being performed by another set of components of device 300.

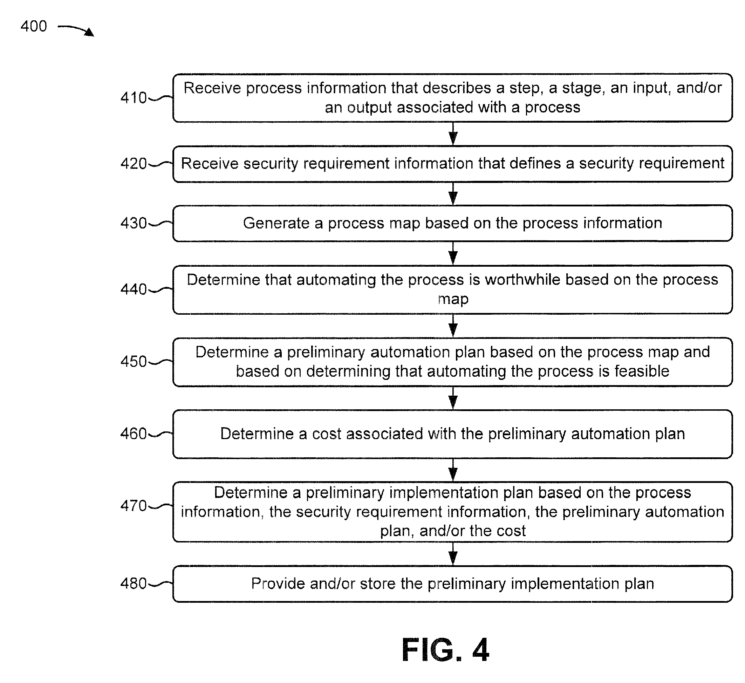

Fig. 4 is a flow chart of an example process 400 for determining a preliminary implementation plan to implement an automation service based on a standardized method. In some implementations, one or more process blocks of Fig. 4 may be performed by automation device 220. In some implementations, one or more process blocks of Fig. 4 may be performed by another device or a set of devices separate from or including automation device 220, such as user device 210, security device 230, and/or design device 240.

As shown in Fig. 4, process 400 may include receiving process information that describes a step, a stage, an input, and/or an output associated with a process (block 410). For example, automation device 220 may receive process information. The process information may describe a process, and may identify an input of the process and/or an output of the process. In some implementations, the process information may include step identification information that describes a step of the process. Automation device 220 may use the process information to determine a preliminary automation plan and/or an implementation plan to automate one or more steps of the process based on a standardized design methodology.

In some implementations, the process information may describe a process. For example, the process information may include a name associated with the process, a name of one or more stages of the process, a geographical location associated with the process, a language associated with the process, or the like. The process may include one or more stages. A stage may include one or more steps. The one or more steps may be performed by user device 210 and/or a user of user device 210. An automation service that is provided by a device (e.g., user device 210, automation device 220, or another device) may be capable of performing a particular step of the process. In that case, the particular step may be an automatable step.

An automation service may be a service that performs one or more steps of a process. For example, assume that user device 210 performs a process. Assume further that user device 210 performs the process based on an interaction by a user of user device 210. Assume further that the interaction by the user can be automated (e.g., an automation service is capable of performing, mimicking, etc., the interaction). In that case, the interaction may be performed by an automation service. The automation service may be provided by user device 210 (e.g., may be a program executed by user device 210), automation device 220, a dedicated automation device, or another device.

In some implementations, automation device 220 may receive the process information in a standardized format. For example, user device 210 may provide the process information in a specified format, based on a particular set of requests for the process information, in a spreadsheet that provides the information in a specified format, or the like. In this way, automation device 220 may ensure that user device 210 provides particular process information that is required to determine an automation plan and/or an implementation plan.

In some implementations, the process information may include information that identifies an input and/or an output of the process. For example, the process information may identify a material required to perform the process, information required to perform the process, a quantity of users (e.g., workers) required to perform the process, or the like. In some implementations, the process information may identify an output of the process. For example, the process information may identify information, a document, a product, an action, or the like, generated by performing the process.

In some implementations, the process information may include step identification information (e.g., information that identifies and/or describes a step of the process). For example, the step identification information may identify a name associated with the step, a cost associated with the step, an action performed to execute the step, or the like. The step identification information may describe a relative order of the step in the process (e.g., in a sequence of steps) and/or may identify whether the step is critical (e.g., whether the step is required, optional, etc.) to executing and/or performing the process. Automation device 220 may use the step identification information to determine a preliminary automation plan to automate the process, as described in more detail elsewhere herein.

In some implementations, the step identification information may identify one or more inputs required by a step, may identify one or more outputs generated by performing a step, or the like. In some implementations, the step identification information may indicate a destination of an output, such as a device, an entity, another step of the process that uses the output as an input, or the like.

In some implementations, the step identification information may identify an automation indicator associated with a step. The automation indicator may indicate that the step is an automatable step. Automation device 220 may use the automation indicator to determine a preliminary automation plan, as described in more detail elsewhere herein.

In some implementations, automation device 220 may receive the process information from user device 210. For example, user device 210 may receive the process information (e.g., based on a user input), and may provide the process information to automation device 220. In some implementations, user device 210 may determine and/or generate the process information without user input. For example, user device 210 may determine the process information by evaluating an iteration of the process, or the like, and may provide the process information to automation device 220.

In some implementations, automation device 220 may receive the process information based on a user interaction. For example, a user of automation device 220 may provide, via a user interface provided by automation device 220, the process information. Additionally, or alternatively, the user may provide a file to automation device 220 that includes the process information. For example, the user may upload the file from another device, may provide the file via a computer-readable medium, or the like.

As further shown in Fig. 4, process 400 may include receiving security requirement information that defines a security requirement (block 420). For example, automation device 220 may receive security requirement information that describes a security requirement. The security requirement information may include information related to designing, providing, and/or authenticating the automation service. In some implementations, automation device 220 may receive the security requirement information from a device, such as user device 210 or another device. Additionally, or alternatively, automation device 220 may receive the security requirement information via a user input. The security requirement information may be used by automation device 220, design device 240, and/or an implementation group to design security processes, such as an authentication process, an access rule, an automation schedule, or the like.

In some implementations, the security requirement information may include information related to providing an automation service with access to user device 210, to allow the automation service to automate one or more steps of a process performed by a user of user device 210. For example, the security requirement information may include an automation user identifier preference that indicates whether to generate a user identifier to permit the automation service to access user device 210. The automation user identifier preference may cause security device 230 to generate a user identifier and/or a credential. Security device 230 may store the user identifier and/or the credential and/or may provide the user identifier and/or the credential to another device, such as user device 210, automation device 220, design device 240, a dedicated automation device, or the like.

In some implementations, the security requirement information may be related to information storage. For example, user device 210 may provide security requirement information that indicates that information related to the automation service is to be stored securely. Based on the security requirement information, automation device 220 may determine a preliminary implementation plan that causes the information related to the automation service to be stored securely. In some implementations, a device (e.g., a dedicated automation device) may store the information in temporary memory, in a secure memory location, or the like.

In some implementations, the security requirement information may include a request for an unattended automation service. In some implementations, an unattended automation service may be a type of automation service that constantly monitors an automated process. For example, a dedicated automation device may provide the unattended automation service. The unattended automation service may monitor a process that includes an automated step, and may perform the automated step based on detecting an input of the automated step. In some implementations, the dedicated automation device may require a particular type of credential to constantly access the process in order to provide the unattended automation service. In that case, automation device 220, security device 230, or another device may determine the credential, and may provide the credential to the dedicated automation device.

In some implementations, the security requirement information may include a request for a hybrid automation service. A hybrid automation service may be a type of service that automates a process on demand. For example, a dedicated automation device may provide the hybrid automation service, and the hybrid automation service may perform an automated step based on detecting a user interaction to cause the hybrid automation service to perform the automated step. The hybrid automation service may require a particular type of credential to access the process in order to provide the automation service on demand.

In some implementations, the security requirement information may include an automation schedule during which to provide the automation service with access to the process. For example, the security requirement information may identify a number of days per week to provide access, a number of hours per day to provide access, or the like. In some implementations, the automation service may be provided based on the automation schedule. Additionally, or alternatively, a device may constantly provide the automation service. For example, a dedicated automation device may constantly provide an unattended automation service.

In some implementations, the security requirement information may include a proxy indicator. The proxy indicator may indicate that a process is performed by user device 210 via a proxy. For example, a user of user device 210 may access an application that performs the process via a proxy. In some implementations, user device 210, automation device 220, security device 230, design device 240, or another device may generate a credential to provide the automation service access to the process via the proxy.

As further shown in Fig. 4, process 400 may include generating a process map based on the process information (block 430). For example, automation device 220 may generate a process map based on the process information. In some implementations, the process map may include information related to one or more steps of the process. Additionally, or alternatively, the process map may include information related to all steps of the process. In some implementations, the process map may be used by automation device 220 to determine a preliminary automation plan and/or a preliminary implementation plan, and/or by design device 240 to determine a final automation plan and/or a final implementation plan.

In some implementations, the process map may identify an input of the process. For example, based on automation device 220 receiving process information that identifies an input of a process, automation device 220 may generate a process map that identifies the input of the process. In some implementations, the process map may identify multiple, different inputs of a process. For example, the process map may identify one or more inputs of a stage and/or a step of a process, one or more inputs of each stage and/or step of a process, all inputs of a process, or the like. In some implementations, the process map may describe an input of the process (e.g., may describe an information input, a material input, a number of workers required to perform the process, may include information that indicates whether the input is critical, etc.).

In some implementations, the process map may describe a step of the process. For example, based on automation device 220 receiving step identification information that describes a step of a process, automation device 220 may generate a process map that describes the step of the process. The process map may describe a name of the step, an input of the step, an action taken to perform the step, whether the step is required or optional, whether the step is automatable, one or more steps that depend from the step, one or more steps on which the step depends, or the like.

In some implementations, the process map may identify an output of the process. For example, based on automation device 220 receiving process information that identifies an output of the process, automation device 220 may generate a process map that identifies the output of the process. In some implementations, the process map may identify multiple, different outputs of a process, may identify all outputs of the process, may identify one or more outputs associated with each step of the process, each stage of the process, or the like.

In some implementations, the process map may include a Supplier-Input-Process-Output-Customer (SIPOC) map that describes a process. The SIPOC map may include information that defines a supplier (e.g., a device, entity, etc. that provides an input to the process), an input to the process, an input requirement (e.g., a condition, a criterion, etc., that an input must satisfy), a process name, an output, an output requirement (e.g., a condition, a criterion, etc., that an output must satisfy), a customer (e.g., a device, entity, etc. that receives an output based on the process being performed), or the like. The SIPOC map may be used by automation device 220, design device 240, or another device to determine an implementation plan and/or an automation plan.

As further shown in Fig. 4, process 400 may include determining that automating the process is worthwhile based on the process map (block 440). For example, automation device 220 may determine that automating the process is worthwhile based on information included in the process map, such as an input, step identification information, and/or an output of one or more steps of the process. In some implementations, a user of automation device 220 may determine that automating the process is worthwhile. For example, based on the process map determined by automation device 220, a user of automation device 220 may determine that automating the process is worthwhile. The user may provide input, to automation device 220, indicating that automating the process is worthwhile.

In some implementations, automation device 220 may determine that automating the process is worthwhile based on a step of the process. For example, assume that process information includes an automation indicator that indicates that one or more steps of the process are automatable. Based on the one or more steps of the process being automatable, automation device 220 may determine that automating the process is worthwhile.

In some implementations, automation device 220 may determine that automating the process is worthwhile based on a step time that is decreased by automating the process. For example, assume that automation device 220 receives information that identifies a step time (e.g., an amount of time spent to perform a step). Assume further that automation device 220 determines an automated step time that indicates an amount of time spent to perform the step after automating the step. Automation device 220 may determine an amount of time saved by comparing the step time to the automated step time. Based on determining the amount of time saved, automation device 220 may determine whether automating the process is worthwhile. In some implementations, automation device 220 may determine that automating the process is worthwhile based on the amount of time saved satisfying a particular threshold, or the like.

In some implementations, automation device 220 may determine that automating the process is worthwhile based on a threshold amount of a cost decrease associated with automating the process. For example, automation device 220 may determine a cost associated with a step. Automation device 220 may further determine that the cost associated with the step can be reduced by automating the step. Based on determining that the cost associated with the step can be reduced by a threshold amount, automation device 220 may determine that automating the process is worthwhile.

In some implementations, automation device 220 may determine that automating a process is worthwhile based on a previously automated process. For example, assume that automation device 220 determines a preliminary automation plan for a first process. Based on the preliminary automation plan, automation device 220 may determine that automating a second process is worthwhile. In some implementations, automation device 220 may determine that the first process is similar to the second process (e.g., may determine that a number of differences between the first process and the second process is less than a threshold number of differences), and may determine that automating the first process is worthwhile based on the first process being similar to the second process.

As further shown in Fig. 4, process 400 may include determining a preliminary automation plan based on the process map and based on determining that automating the process is worthwhile (block 450). For example, automation device 220 may determine a preliminary automation plan based on the process map and based on determining that automating the process is worthwhile. In some implementations, automation device 220 may determine the preliminary automation plan based on a user input (e.g., by a user of automation device 220, or the like).

In some implementations, the preliminary automation plan may include information related to implementing the preliminary automation plan. For example, the preliminary automation plan may include an implementation schedule that defines a schedule of implementing an automation service. In some implementations, the preliminary automation plan may include a cost, such as a cost to design the automation service, a cost to implement the automation service, a cost to perform the automation service, a cost to maintain the automation service, or the like. The information related to implementing the preliminary automation plan may aid automation device 220 in determining a preliminary implementation plan.

In some implementations, the preliminary automation plan may include information that defines a challenge of implementing the preliminary automation plan. For example, the preliminary automation plan may identify a step that is difficult to automate, a cost of implementing the preliminary automation plan that is greater than a threshold, a characteristic of user device 210 that increases a difficulty of automating the process, or the like. Automation device 220 may use the information that defines the challenge to determine a preliminary implementation plan in a manner that accounts for the challenge. For example, automation device 220 may provide the information that defines the challenge to a user. The user may determine the preliminary implementation plan in a manner that accounts for the challenge.

In some implementations, automation device 220 may determine the preliminary automation plan based on the step identification information. For example, assume that the step identification information includes an automation indicator that identifies one or more automatable steps. Based on the automation indicator, automation device 220 may determine the preliminary automation plan.

In some implementations, automation device 220 may select the preliminary automation plan from one or more existing preliminary automation plans. For example, assume that automation device 220 stores information that describes multiple, different preliminary automation plans. Assume further that automation device 220 determines, based on the process map, that the process may be automated based on a particular preliminary automation plan of the multiple, different preliminary automation plans (e.g., based on detecting a similarity between the process and a second process associated with the preliminary automation plan). Based on determining that the process can be automated based on the particular preliminary automation plan, automation device 220 may select the particular preliminary automation plan.

In some implementations, automation device 220 may determine the preliminary automation plan based on a previously implemented automation plan. For example, assume that automation device 220 determines a first preliminary automation plan to automate a first process. Assume further that automation device 220 stores information that describes the first preliminary automation plan. Assume that automation device 220 receives process information that describes a second process. Assume further that the second process is similar to the first process. That is, assume that the first process and the second process share an input, an output, an automatable step, or the like. Automation device 220 may determine that the second process is similar to the first process. Based on determining that the second process is similar to the first process, automation device 220 may select the first preliminary automation plan to be used to automate the second process.

In some implementations, a user of automation device 220 may select the preliminary automation plan. For example, automation device 220 may provide the process map for display to a user. In some implementations, automation device 220 may provide information that describes one or more preliminary automation plans to the user. Based on the process map, and based on the one or more preliminary automation plans, the user of automation device 220 may select a preliminary automation plan.

As further shown in Fig. 4, process 400 may include determining a cost associated with the preliminary automation plan (block 460). For example, automation device 220 may determine a cost associated with the preliminary automation plan (e.g., a cost of designing, implementing, and/or maintaining the preliminary automation plan, a cost savings associated with implementing the preliminary automation plan, or the like). In some implementations, the cost may include a monetary cost. Additionally, or alternatively, the cost may include a non-monetary cost (e.g., a time cost, a processing power cost, or the like). In some implementations, automation device 220 may determine multiple, different costs associated with the preliminary automation plan.

In some implementations, automation device 220 may determine the cost based on a cost associated with a previously implemented preliminary automation plan. For example, assume that automation device 220 determines a preliminary automation plan to automate a first process. Assume further that automation device 220 determines a maintenance cost associated with automating the first process. Assume that automation device 220 selects the preliminary automation plan to automate a second process based on determining a similarity between the first process and the second process. Automation device 220 may determine a maintenance cost associated with automating the second process based on the maintenance cost associated with automating the first process.

As further shown in Fig. 4, process 400 may include determining a preliminary implementation plan based on the process information, the security requirement information, the preliminary automation plan, and/or the cost (block 470). For example, automation device 220 may determine a preliminary implementation plan. In some implementations, automation device 220 may determine the preliminary implementation plan based on process information, security requirement information, a preliminary automation plan, and/or a cost associated with a preliminary automation plan. In some implementations, automation device 220, or another device, may determine the preliminary implementation plan iteratively. For example, automation device 220 may modify a first preliminary implementation plan to determine a second preliminary implementation plan, and so on.

In some implementations, the preliminary implementation plan may relate to a security requirement. For example, the preliminary implementation plan may include an information storage process, an authentication process, and/or authentication information based on the security requirement information, or the like. Design device 240 may use the information related to the security requirement to determine a final implementation plan based on the security requirement, as described in more detail elsewhere herein.

In some implementations, automation device 220 may determine the preliminary implementation plan based on a modified preliminary automation plan. For example, automation device 220 or another device, such as design device 240, may modify an existing preliminary automation plan to determine a modified preliminary automation plan or a final automation plan (e.g., to improve a cost associated with the preliminary automation plan, to automate more steps than the preliminary automation plan, to automate fewer steps than the preliminary automation plan, or the like).

In some implementations, automation device 220 may determine a preliminary implementation plan based on user input. For example, automation device 220 may provide, to a user and via a user interface, one or more preliminary implementation plans. The user may select, by interacting with the user interface, one of the one or more preliminary implementation plans. Additionally, or alternatively, the user may determine the preliminary implementation plan, and may provide the preliminary implementation plan to automation device 220 (e.g., via the user interface).

As further shown in Fig. 4, process 400 may include providing and/or storing the preliminary implementation plan (block 480). For example, automation device 220 may provide and/or store the preliminary implementation plan. In some implementations, automation device 220 may provide the preliminary implementation plan to a device (e.g., design device 240, or another device). Additionally, or alternatively, automation device 220 may provide the preliminary implementation plan to an entity, such as an implementation group. In some implementations, automation device 220 may provide a preliminary automation plan in association with the preliminary implementation plan. In this way, automation device 220 may determine a preliminary automation plan and a preliminary implementation plan using a standardized methodology, by performing the operations described herein. Using the standardized methodology may increase efficiency of determining the automation plan and the implementation plan across different processes, technologies, and industries.

Although Fig. 4 shows example blocks of process 400, in some implementations, process 400 may include additional blocks, fewer blocks, different blocks, or differently arranged blocks than those depicted in Fig. 4. Additionally, or alternatively, two or more of the blocks of process 400 may be performed in parallel.

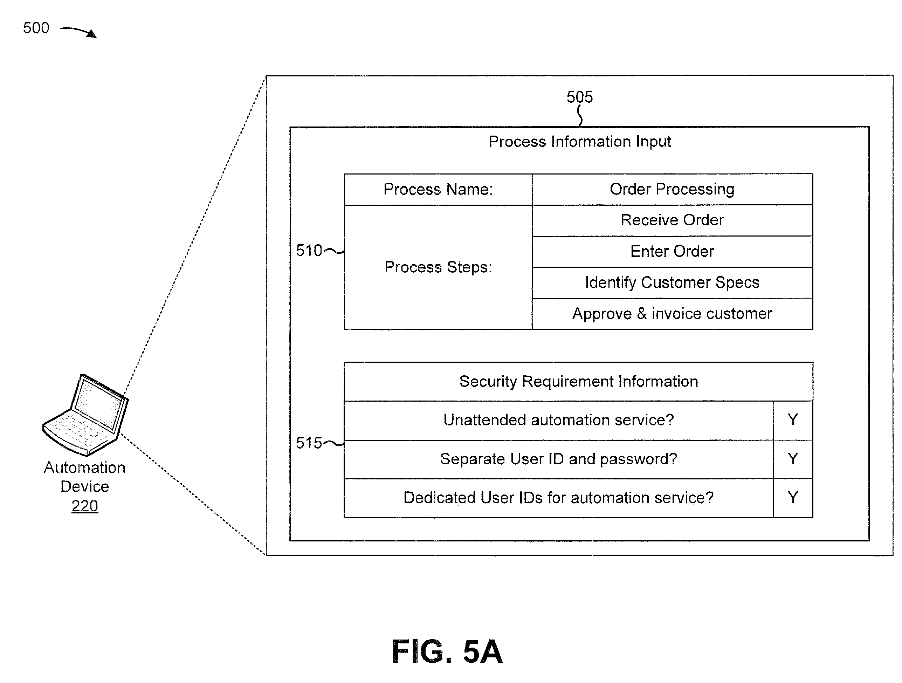

Figs. 5A-5F are diagrams of an example implementation 500 relating to example process 400 shown in Fig. 4. Figs. 5A-5F show an example of determining a preliminary implementation plan to implement an automation service based on a standardized method.

As shown in Fig. 5A, and by reference number 505, automation device 220 may receive process information. Assume that automation device 220 receives the process information from user device 210 based on a user input. As shown by reference number 510, automation device 220 may receive a name of a process (e.g., shown as "Order Processing") and one or more steps of the process (e.g., shown as "Receive order," "Enter order," "Identify customer specs," and "Approve & invoice customer"). As shown by reference number 515, automation device 220 may receive security requirement information. As further shown, the security requirement information may indicate to provide an unattended automation service, that the process requires a separate user identifier and password, and that the process requires a dedicated user identifier for an automation service.

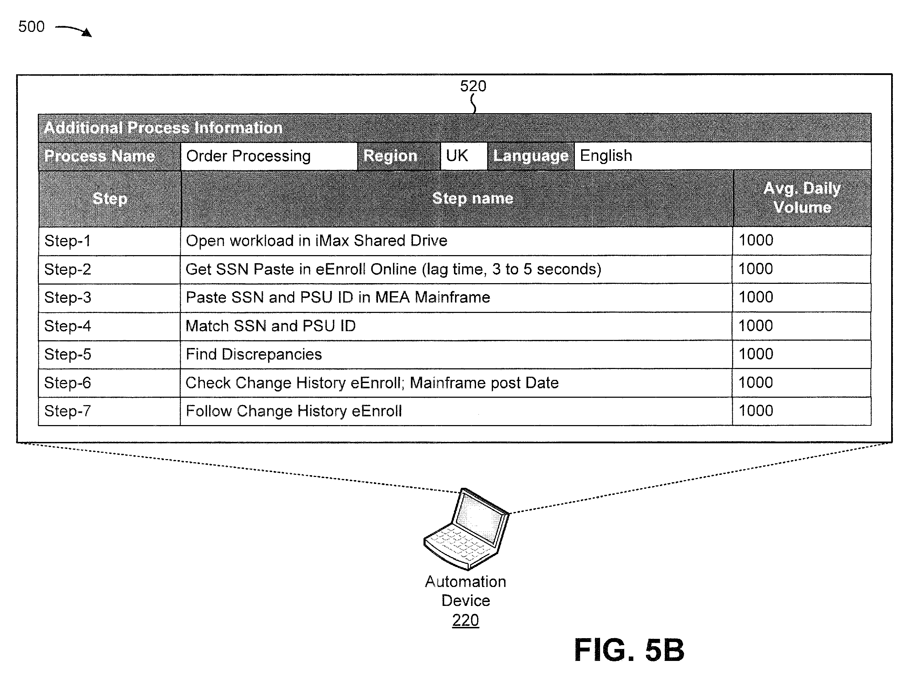

As shown in Fig. 5B, and by reference number 520, automation device 220 may receive additional process information from user device 210. As further shown, the additional process information may identify the name of the process (e.g., Order Processing), a geographical region associated with the process (e.g., shown as UK), and a language associated with the process (e.g., shown as English). As further shown, the additional process information may define one or more steps associated with the process (e.g., shown as Step-1, Step-2, and so on), and an average daily volume associated with the one or more steps (e.g., shown as 1000, representing 1000 daily repetitions of the step on an average day).

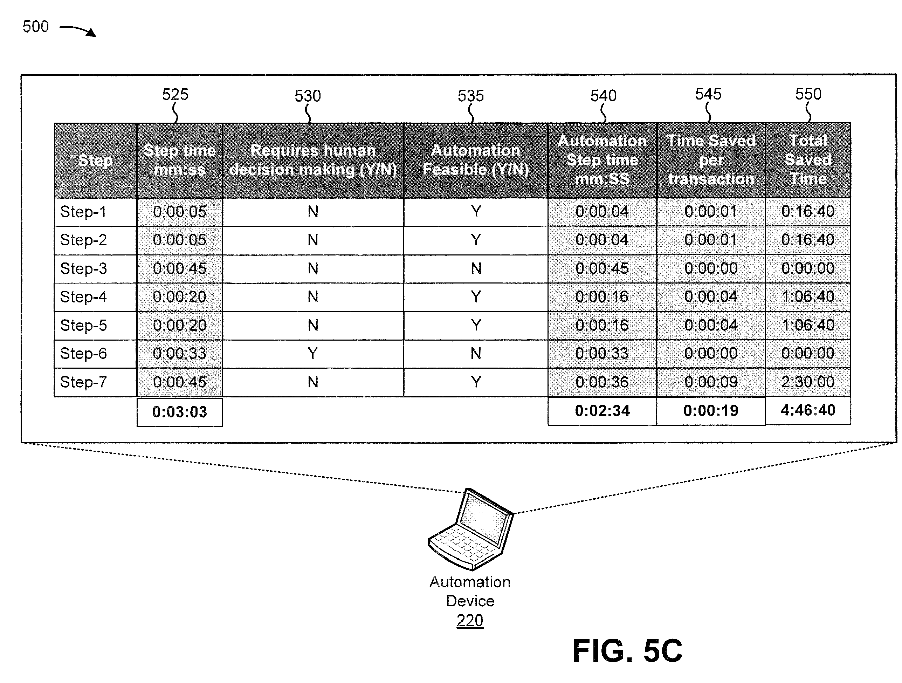

As shown in Fig. 5C, automation device 220 may receive additional process information that describes the process. As shown by reference number 525, automation device 220 may receive step time information that describes a time required to perform each step. Here, Step-1 requires 5 seconds to perform, Step-2 requires 5 seconds to perform, Step-3 requires 45 seconds to perform, and so on. As shown by reference number 530, automation device 220 may receive information that indicates whether each step requires human decision making. As shown by reference number 535, automation device 220 may determine whether each step is automatable. Assume that automation device 220 determines whether each step is automatable based in part on whether each step requires human decision making.

As further shown in Fig. 5C, and by reference number 540, automation device 220 may determine an automated step time (e.g., a time required to perform each step while providing the automation service). Here, Step-1 requires 4 seconds to perform after automation, and so on. Here, Step-3 and Step-6 are not automated, so the automated step times associated with Step-3 and Step-6 are equal to the step times associated with Step-3 and Step-6. As shown by reference number 545, automation device 220 may determine a time saved per transaction. Assume that automation device 220 determines the time saved per transaction by subtracting the automated step time of each step from the step time of each step. As further shown, automation device 220 may sum the time saved per transaction for each step to determine a total time saved per transaction.

As shown by reference number 550, automation device 220 may determine a total saved time for each step of the process. Assume that automation device 220 determines the total saved time for each step by multiplying the time saved per transaction by the average daily volume associated with the step. For example, automation device 220 determines the total saved time for Step-7 by multiplying the time saved per transaction of 9 seconds, by the average daily volume of 1000 transactions, to determine a total saved time of 2 hours and 30 minutes.

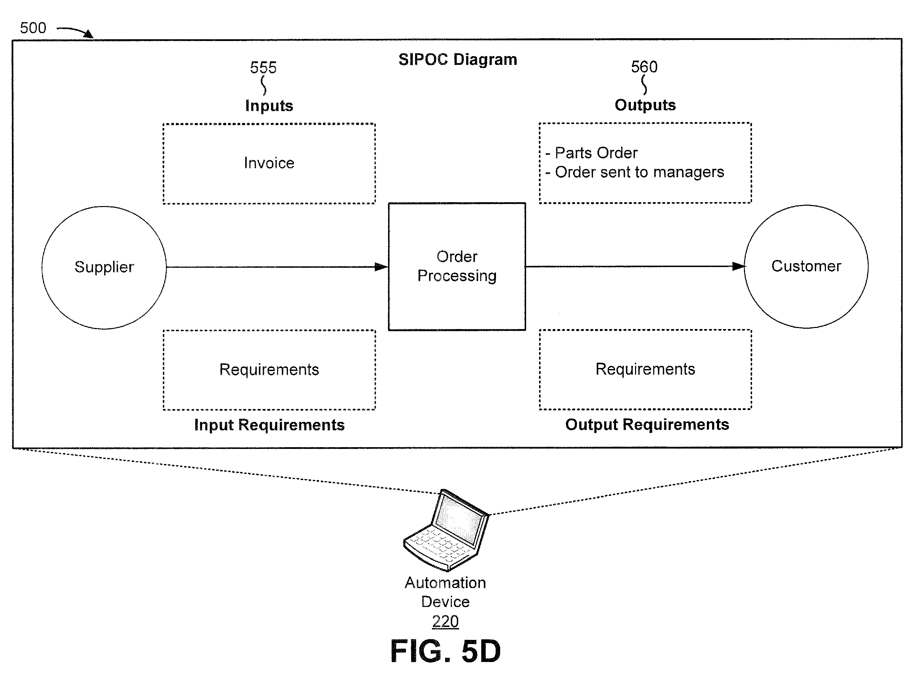

As shown in Fig. 5D, automation device 220 may generate a Supplier-Input-Process-Output-Customer (SIPOC) map that describes the process. As shown by reference number 555, the SIPOC map may include a list of inputs (e.g., an invoice) and a list of input requirements. As further shown, the SIPOC map may include the name of the process (e.g., Order Processing). As shown by reference number 560, the SIPOC map may include a list of outputs (e.g., a parts order and a parts order sent to managers) and a list of output requirements. Assume that the SIPOC map identifies a supplier (e.g., in a "Supplier" circle) and a customer (e.g., in a "Customer" circle).

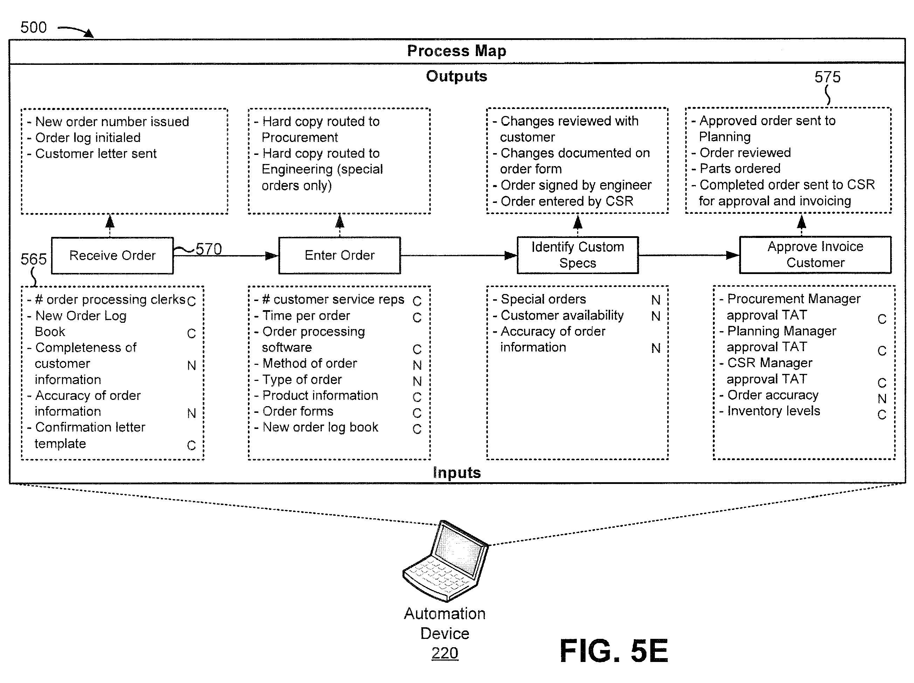

As shown in Fig. 5E, automation device 220 may generate a second process map that describes the process. As shown by reference number 565, the process map may identify one or more inputs of the process. As further shown, the process map may indicate that the one or more inputs are associated with a particular stage (e.g., by providing the one or more inputs for display in association with information that identifies a stage). As further shown, the process map may show information that describes an input. Here, the input of "# order processing clerks" is provided for display in association with a "C," which may denote that the input is critical (e.g., required) to perform the process. Further, the input "Completeness of customer information" is provided for display in association with an "N," which may denote that the input is not critical (e.g., not required) to perform the process.

As shown by reference number 570, the process map may include information that identifies each stage of the process (e.g., shown as "Receive Order," and so on). As shown by reference number 575, the process map may include information that describes one or more outputs. As further shown, the process map may indicate an association between an output and a stage by providing, for display, the output in association with the stage. Assume that automation device 220 determines a preliminary automation plan based on the SIPOC map, the process map, and information that defines whether each step is automatable.

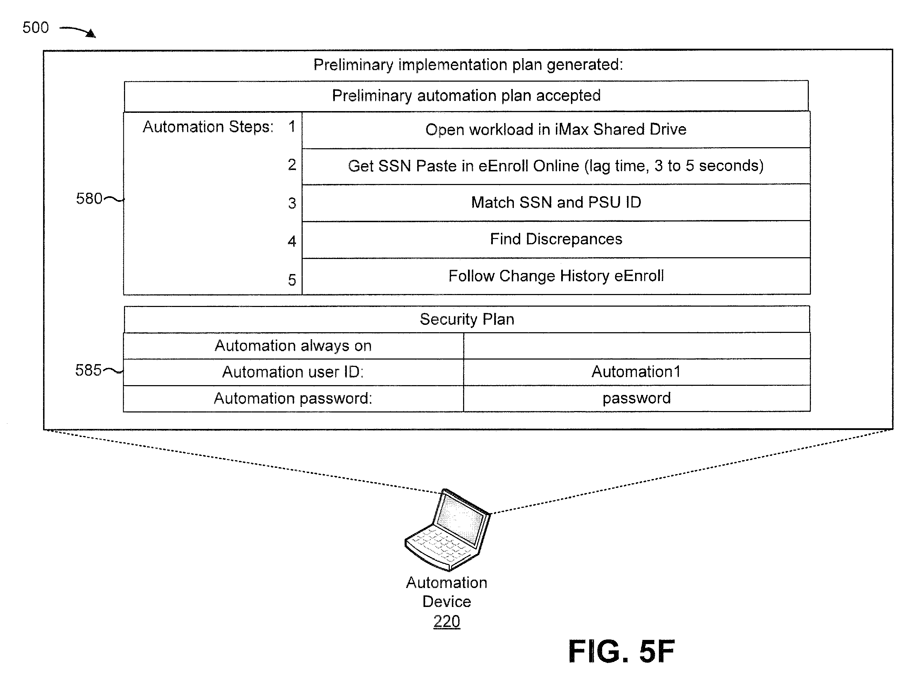

As shown in Fig. 5F, and by reference number 580, automation device 220 may determine a preliminary implementation plan to implement the preliminary automation plan. Assume that automation device 220 determines the preliminary implementation plan based on the preliminary automation plan, the process map, and the process information. As further shown, automation device 220 may accept the preliminary automation plan (e.g., may not modify the preliminary implementation plan, may not determine a different preliminary implementation plan, or the like). As shown, automation device 220 may provide information that describes one or more automated steps. Here, automation device 220 lists the automated steps.

As shown by reference number 585, automation device 220 may determine a security plan. Assume that automation device 220 determines the security plan based on the security requirement information. As shown, automation device 220 may determine that the automation process is to be always on. That is, the automation device may run continuously on user device 210. As further shown, automation device 220 may provide a user identifier (e.g., an automation user ID of Automation1) and a credential (e.g., an automation password of "password") to grant the automation service access to the process. Assume that automation device 220 provides the preliminary implementation plan, the preliminary automation plan, and the security plan to design device 240.

In this way, automation device 220 may determine a preliminary automation plan to provide an automation service, and may further determine a preliminary implementation plan to implement the preliminary automation plan, based on a standardized design methodology.

As indicated above, Figs. 5A-5F are provided merely as an example. Other examples are possible and may differ from what was described with regard to Figs. 5A-5F.

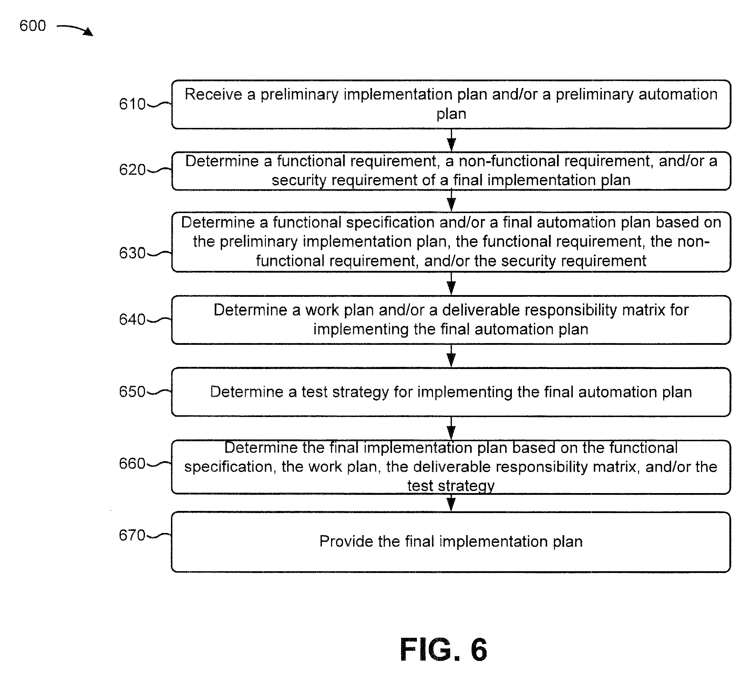

Fig. 6 is a flow chart of an example process 600 for refining an implementation plan to automate a process based on a standardized method. In some implementations, one or more process blocks of Fig. 6 may be performed by design device 240. In some implementations, one or more process blocks of Fig. 6 may be performed by another device or a set of devices separate from or including design device 240, such as user device 210, automation device 220, and/or security device 230.

As shown in Fig. 6, process 600 may include receiving a preliminary implementation plan and/or a preliminary automation plan (block 610). For example, design device 240 may receive a preliminary implementation plan from automation device 220. In some implementations, the preliminary implementation plan may include a preliminary automation plan, as described in more detail herein in connection with Fig. 4. Design device 240 may use the preliminary implementation plan to determine a final implementation plan to implement an automation service. In some implementations, design device 240 may receive the preliminary implementation plan based on a user input. For example, a user of design device 240 may provide the preliminary implementation plan via a user interface provided by design device 240.

As further shown in Fig. 6, process 600 may include determining a functional requirement, a non-functional requirement, and/or a security requirement of a final implementation plan (block 620). For example, design device 240 may determine a functional requirement, a non-functional requirement, and/or a security requirement of a final implementation plan. In some implementations, design device 240 may determine the functional requirement, the non-functional requirement, and/or the security requirement based on the preliminary automation plan. Additionally, or alternatively, design device 240 may determine the functional requirement, the non-functional requirement, and/or the security requirement based on additional information, such as a process map, security requirement information, a user input, or the like.

In some implementations, design device 240 may determine a functional requirement of a final implementation plan. For example, design device 240 may determine a calculation, a technical detail, a step, or the like, related to implementing the automation service. In some implementations, design device 240 may determine the functional requirement based on information associated with the preliminary implementation plan. For example, the preliminary implementation plan may include security requirement information, input information, process information, or the like. Based on the information associated with the preliminary implementation plan, design device 240 may determine the functional requirement.

In some implementations, design device 240 may determine a non-functional requirement of a final implementation plan. For example, design device 240 may determine one or more criteria and/or qualitative preferences based on which to judge an implementation of the automation service, such as a quality of the implementation, a security of the implementation, a maintainability of the implementation, a resilience of the implementation against failure, or the like. In some implementations, design device 240 may determine the non-functional requirement based on information associated with the preliminary implementation plan and/or the preliminary automation plan. For example, assume that the preliminary automation plan includes a plan to provide a user interface in association with the automation service. Design device 240 may determine a non-functional requirement, such as an intuitiveness of the user interface, a quality of the user interface, or the like, based on the plan to provide the user interface. The non-functional requirements may be used by an implementation group to ensure that the automation service is implemented according to a particular qualitative preference.

In some implementations, design device 240 may determine a security requirement of a final implementation plan. For example, design device 240 may determine a security plan, an information storage process, a type of automation service (e.g., an unattended automation service, a hybrid automation service, or the like), or the like, for implementing the automation service. In some implementations, design device 240 may determine the security requirement of the final implementation plan based on security requirement information received from user device 210.

As further shown in Fig. 6, process 600 may include determining a functional specification and/or a final automation plan based on the preliminary implementation plan, the functional requirement, the non-functional requirement, and/or the security requirement (block 630). For example, design device 240 may determine a functional specification based on the preliminary implementation plan, the functional requirement, the non-functional requirement, and/or the security requirement. The functional specification may define a final automation plan to provide an automation service. Design device 240 may provide the functional specification and/or the final automation plan to another entity, such as an implementation group.

The functional specification may describe one or more items, materials, and/or services that are required by a device, a group, or the like, to maintain and/or perform the automation service. In some implementations, the functional specification may describe a procedure to ensure that the one or more items, materials, and/or services are provided. For example, assume that an automation service requires a credential to access a process. The functional specification may describe the credential, may describe a method of receiving the credential, and/or may describe a method of ensuring that the credential is received.

As further shown in Fig. 6, process 600 may include determining a work plan and/or a deliverable responsibility matrix for implementing the final automation plan (block 640). For example, design device 240 may determine a work plan and/or a deliverable responsibility matrix for implementing the final automation plan. In some implementations, design device 240 may determine the work plan and/or the deliverable responsibility matrix based on a user input. For example, a user may provide, via a user interface, information related to a work plan and/or a deliverable responsibility matrix.

In some implementations, design device 240 may determine a work plan for implementing the final automation plan. For example, design device 240 may determine a schedule for implementing the final automation plan, a budget for implementing the final automation plan, or the like. Design device 240 may determine the work plan based on the functional specification, the preliminary implementation plan, or other information. In some implementations, design device 240 may determine the work plan based on a user input. For example, a user of design device 240 may provide information related to determining the work plan, such as a schedule, a budget, or the like. Based on the information related to determining the work plan, design device 240 may define the work plan.

In some implementations, design device 240 may determine a deliverable responsibility matrix for implementing the final automation plan. The deliverable responsibility matrix may identify one or more deliverables related to implementing the final automation plan. The deliverable responsibility matrix may further identify a party that is responsible for providing the one or more deliverables. For example, assume that implementing the final automation plan requires a manual to be published that describes the final automation plan. The deliverable responsibility matrix may define the manual as a deliverable, and may define one or more parties that are responsible for ensuring that the manual is reviewed and/or published.

As further shown in Fig. 6, process 600 may include determining a test strategy for implementing the final automation plan (block 650). For example, design device 240 may determine a test strategy. The test strategy may provide a method of testing an implementation of the automation service to ensure that the implementation of the automation service is satisfactory. In some implementations, the testing may be performed by another entity, such as an implementation group, or the like.

In some implementations, the test strategy may identify a deliverable to be provided, and a method of testing to ensure that the deliverable is provided. For example, assume that an automation service requires a credential to access an automated process. Design device 240 may determine a test strategy that identifies the credential as a deliverable, and identifies a method of testing to ensure that the credential is provided to the automation service (e.g., may test to ensure that the credential is properly authenticated, may test to ensure that the automation service stores the credential, or the like). The test strategy may be used by an entity, such as an implementation group, to test an implementation of a final implementation plan.

In some implementations, design device 240 may define the test strategy based on user input. For example, a user of design device 240 may provide, via a user interface, information related to the test strategy, such as a functional requirement to be tested, a non-functional requirement to be tested, a security requirement to be tested, a method of testing a requirement, or the like. Based on the information related to the test strategy, design device 240 may define the test strategy.

As further shown in Fig. 6, process 600 may include determining the final implementation plan based on the functional specification, the work plan, the deliverable responsibility matrix, and/or the test strategy (block 660). For example, design device 240 may determine a final implementation plan based on the functional specification, the work plan, the deliverable responsibility matrix, and/or the test strategy. The final implementation plan may define a plan for implementing and testing an automation service. In some implementations, design device 240 may determine the final implementation plan by aggregating the functional specification, the work plan, the deliverable responsibility matrix, the test strategy, and/or other information related to the automation service.

In some implementations, design device 240 may determine a final implementation plan by modifying a preliminary implementation plan. For example, assume that design device 240 receives a preliminary implementation plan from automation device 240. Assume further that design device 240 determines that the preliminary implementation plan may be modified to improve an implementation of the automation service (e.g., the preliminary implementation plan may be modified to improve efficiency or reduce a cost of implementing, performing, or maintaining the automation service). In that case, design device 240 may determine a final implementation plan by modifying the preliminary implementation plan to improve the implementation of the automation service.

As further shown in Fig. 6, process 600 may include providing the final implementation plan (block 670). For example, design device 240 may provide the final implementation plan to an implementation group. The implementation group may implement the automation service based on the final implementation plan. In some implementations, one or more actions of the implementation group may be automated. For example, the implementation group may automatically monitor the implemented automation service, may automatically generate feedback to improve the implemented automation service, may automatically improve the implemented automation service based on the monitoring and/or the feedback, or the like.

In some implementations, design device 240 may cause the automation service to be executed. For example, the automation plan may include an instruction, a command, a message, etc. for executing the automation service by a device. In some implementations, design device 240 may execute the automation service. Additionally, or alternatively, design device 240 may provide the instruction(s), command(s), message(s), etc. to another device to cause execution of the automation service.

In some implementations, design device 240 and/or the implementation group may configure a device based on the final implementation plan. For example, design device 240 and/or the implementation group may configure a device to provide the automation service (e.g., user device 210, a dedicated automation device, or another device). In some implementations, design device 240 and/or the implementation group may configure security device 230 to perform a security function related to the automation service, such as authenticating a credential of the automation service, storing and/or providing a credential for authentication, or the like.

In some implementations, design device 240 and/or the implementation group may implement an automation service based on the final automation plan and/or the final implementation plan. For example, design device 240 and/or the implementation group may generate program code, an application, a script, or the like, to perform one or more steps that are automated based on the final automation plan. Design device 240 and/or the implementation group may provide the program code, application, and/or script to a dedicated automation device to cause execution, by the automation device, of one or more automated steps of the automated service. In some implementations, the implementation group, or another group, may test the implementation based on a test strategy.

In some implementations, design device 240 and/or the implementation group may plan and/or execute a user acceptance test. For example, after implementing the automation service, the implementation group may plan a user acceptance test. The user acceptance test may test whether a user associated with user device 210 is satisfied with the automation service. Based on a result of the user acceptance test, design device 240 and/or the implementation group may modify the implementation of the automation service. For example, if the result of the user acceptance test indicates that a user is dissatisfied with a user interface of the automation service, design device 240 and/or the implementation group may modify the user interface based on the result. In this way, the implementation group may modify the implementation of the automation service based on a user acceptance test, which may improve the implementation.

In this way, design device 240 may determine a final implementation plan to implement a final automation plan based on a preliminary implementation plan, a functional specification, a work plan, a deliverable responsibility matrix, and/or a test strategy. Design device 240, or a user of design device 240, may determine the final implementation plan by using a standardized methodology, using the operations described herein. Using the standardized methodology may increase efficiency of determining the automation plan and the implementation plan across different processes, technologies, and industries.

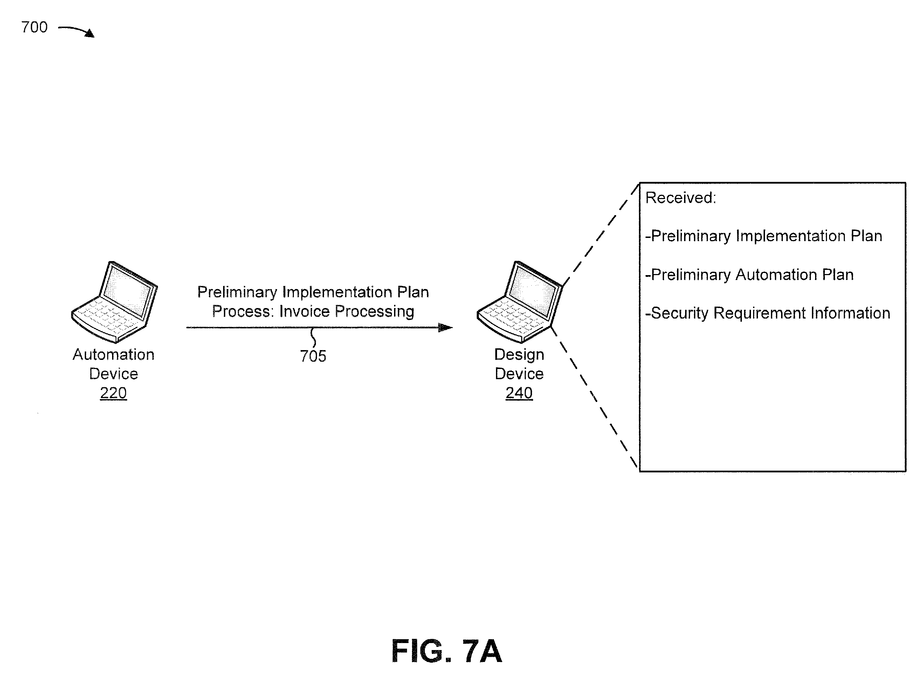

Figs. 7A-7F are diagrams of an example implementation 700 relating to example process 600 shown in Fig. 6. Figs. 7A-7F show an example of determining a final implementation plan to implement an automation service based on a standardized method.

As shown in Fig. 7A, and by reference number 705, automation device 220 may provide a preliminary implementation plan to design device 240. As further shown, design device 240 may receive other information in association with the preliminary implementation plan (e.g., a name of the process, a preliminary automation plan, and security requirement information).

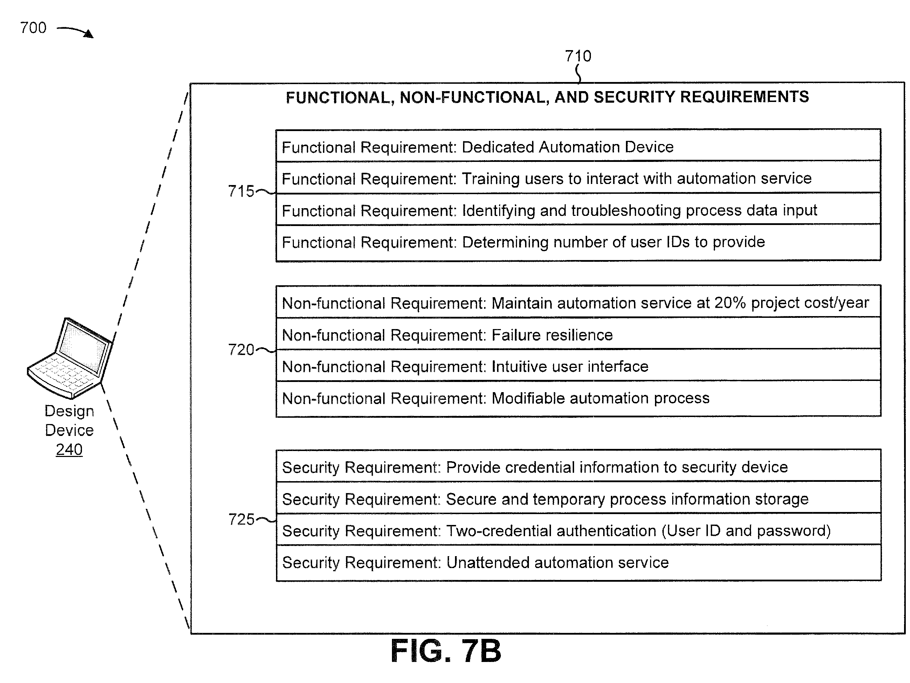

As shown in Fig. 7B, and by reference number 710, design device 240 may determine one or more functional requirements, one or more non-functional requirements, and one or more security requirements. As shown by reference number 715, design device 240 may provide the one or more functional requirements (e.g., a requirement for a dedicated automation device, a requirement to train users to interact with the automation service, a requirement to identify and troubleshoot process data input, and a requirement to determine a number of user identifiers to provide).

As shown by reference number 720, design device 240 may provide the one or more non-functional requirements. As shown, the non-functional requirements may include a requirement to maintain an automation service at 20% of a project cost per year, a requirement that the automation service be resilient to failure, a requirement that the automation service provide an intuitive user interface, and a requirement that the automation service be modifiable (e.g., by a user of user device 210). As shown by reference number 725, design device 240 may provide the one or more security requirements. As shown, the security requirements may include a requirement to provide credential information to security device 230 (e.g., to permit security device 230 to authenticate the automation service), a requirement to store process information securely and temporarily, a requirement for security device 230 to provide two-credential authentication to the automation service (e.g., a user identifier and a password), and a requirement that the automation service be an unattended automation service. Assume that design device 240 determines a functional specification based on the functional requirements, the non-functional requirements, and/or the security requirements.

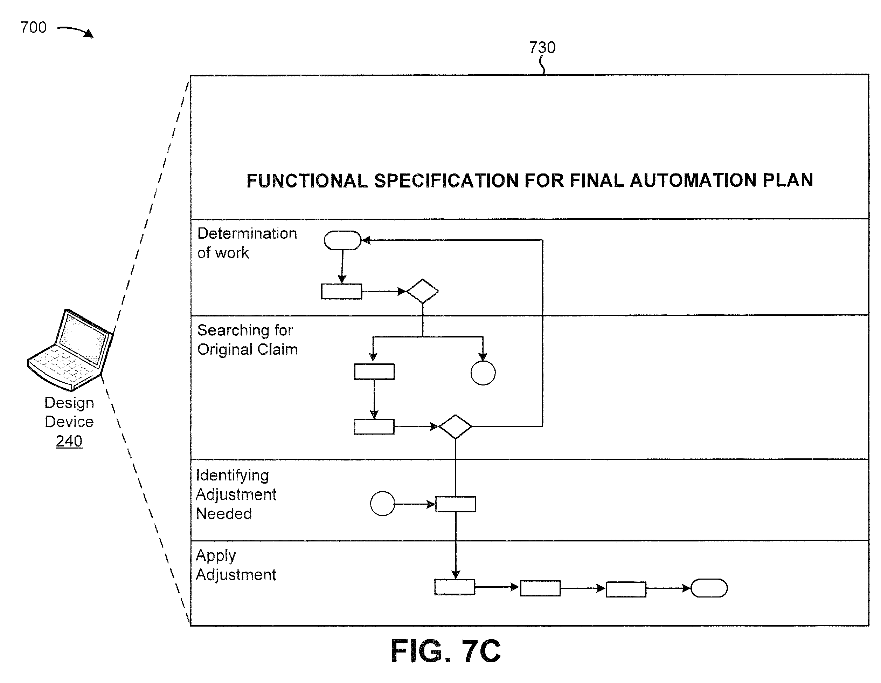

As shown in Fig. 7C, and by reference number 730, design device 240 may provide the functional specification (e.g., for display to a user of design device 240). Assume that the functional specification includes information related to implementing a final automation plan. As shown, the functional specification may include a start and/or an end of the functional specification (e.g., shown as oval shapes), information that identifies an input and/or an output of the functional specification (e.g., shown as circle shapes), one or more intermediate steps of implementing the final automation plan (e.g., shown as rectangle shapes), and/or one or more conditional decisions (e.g., shown as diamond shapes). Assume that design device 240 determines a work plan and a deliverable responsibility matrix based on the functional specification.

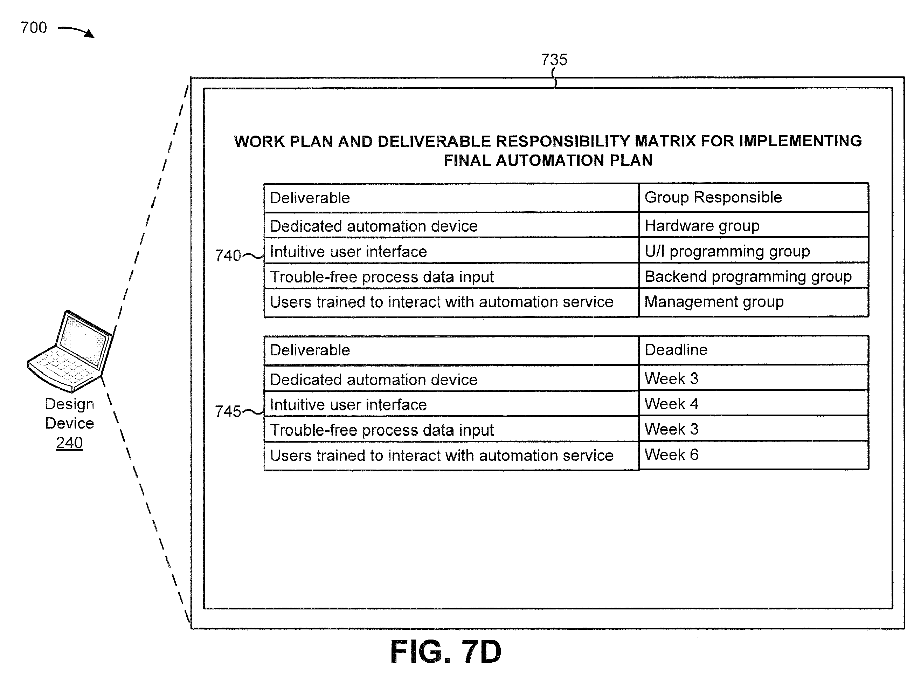

As shown in Fig. 7D, and by reference number 735, design device 240 may provide the work plan and the deliverable responsibility matrix. As shown by reference number 740, the work plan may include a list of deliverables (here, the deliverables are selected from the functional requirements and the non-functional requirements determined by design device 240, as described in association with Fig. 7B) and a group responsible for producing the deliverable. For example, a user interface programming group may be responsible for producing an intuitive user interface. As shown by reference number 745, design device 240 may provide the deliverable responsibility matrix. As further shown, the deliverable responsibility matrix may include the list of deliverables, and may identify a deadline associated with each deliverable included in the list of deliverables. Assume that design device 240 determines a test strategy based on the work plan, the deliverable responsibility matrix, and/or the functional specification.

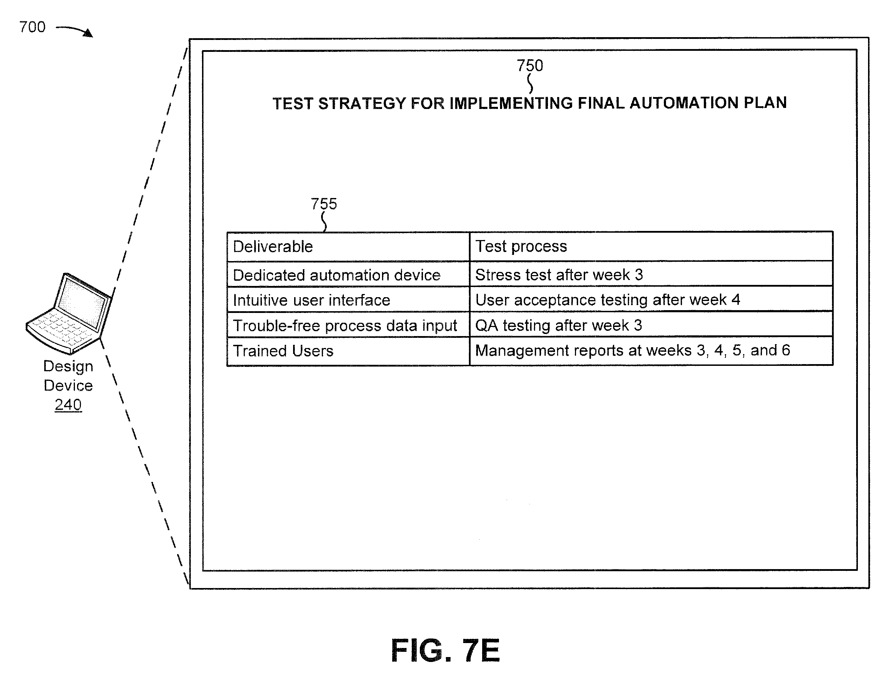

As shown in Fig. 7E, and by reference number 750, design device 240 may provide the test strategy. As shown by reference number 755, the test strategy may include the list of deliverables, and may define a test to perform to evaluate each deliverable of the list of deliverables. For example, in order to test an implementation of a dedicated automation device, an entity, such as a testing group, may perform a stress test after a third week of implementing the final automation plan. Assume that design device 240 determines the final implementation plan (e.g., based on the final automation plan, the functional specification, the work plan, the deliverable responsibility matrix, and the test strategy).

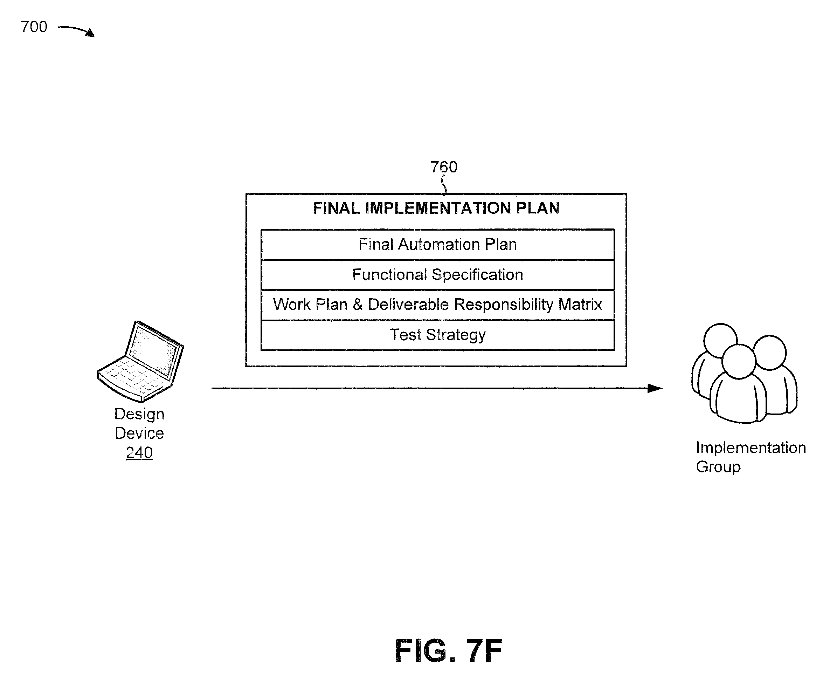

As shown in Fig. 7F, and by reference number 760, design device 240 may provide, to an implementation group and via a user interface associated with design device 240, the final implementation plan. Assume that the implementation group implements an automation service based on the final automation plan and the final implementation plan. In some implementations, the implementation group may monitor performance of the automation service, may generate feedback to improve the automation service, may modify the automation service based on the feedback and/or performance, or the like.

In this way, design device 240 may perform solution planning to determine a final implementation plan to implement a final automation plan based on a standardized methodology. Design device 240 may provide the final implementation plan to an implementation group, which may build, implement, technically test, deploy, perform, and/or maintain the automation service.

As indicated above, Figs. 7A-7F are provided merely as an example. Other examples are possible and may differ from what was described with regard to Figs. 7A-7F.

The foregoing disclosure provides illustration and description, but is not intended to be exhaustive or to limit the implementations to the precise form disclosed. Modifications and variations are possible in light of the above disclosure or may be acquired from practice of the implementations.

As used herein, the term component is intended to be broadly construed as hardware, firmware, and/or a combination of hardware and software.

Some implementations are described herein in connection with thresholds. As used herein, satisfying a threshold may refer to a value being greater than the threshold, more than the threshold, higher than the threshold, greater than or equal to the threshold, less than the threshold, fewer than the threshold, lower than the threshold, less than or equal to the threshold, equal to the threshold, etc.

Certain user interfaces have been described herein and/or shown in the figures. A user interface may include a graphical user interface, a non-graphical user interface, a text-based user interface, etc. A user interface may provide information for display. In some implementations, a user may interact with the information, such as by providing input via an input component of a device that provides the user interface for display. In some implementations, a user interface may be configurable by a device and/or a user (e.g., a user may change the size of the user interface, information provided via the user interface, a position of information provided via the user interface, etc.). Additionally, or alternatively, a user interface may be pre-configured to a standard configuration, a specific configuration based on a type of device on which the user interface is displayed, and/or a set of configurations based on capabilities and/or specifications associated with a device on which the user interface is displayed.

It will be apparent that systems and/or methods, described herein, may be implemented in different forms of hardware, firmware, or a combination of hardware and software. The actual specialized control hardware or software code used to implement these systems and/or methods is not limiting of the implementations. Thus, the operation and behavior of the systems and/or methods were described herein without reference to specific software code-it being understood that software and hardware can be designed to implement the systems and/or methods based on the description herein.

Even though particular combinations of features are recited in the claims and/or disclosed in the specification, these combinations are not intended to limit the disclosure of possible implementations. In fact, many of these features may be combined in ways not specifically recited in the claims and/or disclosed in the specification. Although each dependent claim listed below may directly depend on only one claim, the disclosure of possible implementations includes each dependent claim in combination with every other claim in the claim set.

No element, act, or instruction used herein should be construed as critical or essential unless explicitly described as such. Also, as used herein, the articles "a" and "an" are intended to include one or more items, and may be used interchangeably with "one or more." Furthermore, as used herein, the term "set" is intended to include one or more items, and may be used interchangeably with "one or more." Where only one item is intended, the term "one" or similar language is used. Also, as used herein, the terms "has," "have," "having," or the like are intended to be open-ended terms. Further, the phrase "based on" is intended to mean "based, at least in part, on" unless explicitly stated otherwise.
1. The following items are relevant to the understanding of the invention:A system, comprising:
   one or more devices to:
      receive process information that describes an automatable process, the process information describing at least one of:
         a step of the automatable process,
         a stage of the automatable process,
         an input of the automatable process, or
         an output of the automatable process;
      determine a process map based on the process information, the process map describing the process information;
      determine a preliminary automation plan to provide an automation service based on the process map,
         the preliminary automation plan indicating one or more automatable steps of the automatable process;
      determine an implementation plan based on the preliminary automation plan, the implementation plan describing a method of implementing the automation service based on the preliminary automation plan;
      provide the implementation plan and the preliminary automation plan to permit the automation service to be delivered; and
      cause execution of the automation service by an automation device based on providing the implementation plan and the preliminary automation plan.
2. The system of item 1, where the one or more devices are further to:
   determine a final automation plan, based on the preliminary automation plan, to provide the automation service,
      the final automation plan being determined based on a cost associated with the preliminary automation plan, and
      the final automation plan being determined based on the one or more automatable steps.
3. The system of item 2, where the implementation plan is a preliminary implementation plan; and
   where the one or more devices are further to:
   determine a final implementation plan, based on the final automation plan, to implement the final automation plan,
      the final implementation plan describing a work plan, a deliverable responsibility matrix, and/or a test schedule; and
   provide the final implementation plan.
4. The system of item 1, where the one or more devices are further to:
   determine a functional requirement, a non-functional requirement, and a security requirement related to the automatable process; and
   where the one or more devices, when determining the implementation plan, are further to:
      determine the implementation plan based on the functional requirement, the non-functional requirement, and the security requirement.
5. The system of item 4, where the one or more devices are further to:
   determine a functional specification based on the functional requirement, the non-functional requirement, and the security requirement,
      the functional specification describing the automation service based on the functional requirement, the non-functional requirement, and the security requirement; and where the one or more devices, when determining the implementation plan, are further to:
         determine the implementation plan based on the functional specification.
6. The system of item 1, where the preliminary automation plan is a first preliminary automation plan; and
   where the automatable process is a first automatable process; and
   where the one or more devices, when determining the preliminary automation plan, are further to:
   determine that the first automatable process is similar to a second automatable process,
      the second automatable process being associated with a second
   preliminary automation plan; and
   determine the first preliminary automation plan based on the second preliminary automation plan.
7. The system of item 1, where the one or more devices are further to:
   determine a first cost associated with the one or more automatable steps,
      the first cost being a cost of performing the one or more automatable steps without automation;
   determine a second cost associated with the one or more automatable steps, the second cost being a cost of performing the one or more automatable steps with automation; and
   where the one or more devices, when determining the preliminary automation plan, are further to:
      determine the preliminary automation plan based on comparing the first cost and the second cost.
8. A computer-readable medium storing instructions, the instructions comprising: one or more instructions that, when executed by one or more processors, cause the one or more processors to:
   receive process information that describes an automatable process;
   generate a process map based on the process information, the process map describing the process information;
   determine a preliminary automation plan based on the process map, the preliminary automation plan being a plan to provide an automation
   service, and the preliminary automation plan indicating one or more automatable steps
   of the automatable process;
   determine a preliminary implementation plan based on the preliminary automation plan,
   the preliminary implementation plan describing a method of implementing the automation service based on the preliminary automation plan;
   determine a final automation plan, based on the preliminary automation plan and based on a cost associated with the preliminary automation plan, to provide the automation service,
   the final automation plan being determined based on the one or more automatable steps;
   output or store the final automation plan.
9. The computer-readable medium of item 8, where the one or more instructions, that cause the one or more processors to receive the process information, further cause the one or more processors to:
   receive the process information based on a user input,
      the process information describing at least one of:
      a step of the automatable process,
      a stage of the automatable process,
      an input of the automatable process, or
      an output of the automatable process.
10. The computer-readable medium of item 8, where the one or more instructions, when executed by the one or more processors, further cause the one or more processors to:
   determine a final implementation plan, based on the final automation plan, to implement the final automation plan,
   the final implementation plan describing a work plan, a deliverable responsibility matrix, and/or a test schedule; and
   output or store the final implementation plan.
11. The computer-readable medium of item 8, where the one or more instructions, when executed by the one or more processors, further cause the one or more processors to:
   obtain a functional requirement, a non-functional requirement, or a security requirement related to the automatable process; and
   where the one or more instructions, that cause the one or more processors to determine the final automation plan, further cause the one or more processors to:
      determine the final automation plan based on the functional requirement, the non-functional requirement, or the security requirement.
12. The computer-readable medium of item 11, where the one or more instructions, when executed by the one or more processors, further cause the one or more processors to:
   provide, to a user, the functional requirement, the non-functional requirement, or the security requirement;
   receive, from the user, a functional specification that describes the automation service based on the functional requirement, the non-functional requirement, and the security requirement;
   determine a final implementation plan based on the functional specification; and
   output or store the final implementation plan.
13. The computer-readable medium of item 8, where the preliminary automation plan is a first preliminary automation plan; where the automatable process is a first automatable process; and where the one or more instructions, that cause the one or more processors to determine the preliminary automation plan, further cause the one or more processors to:
   determine a measure of similarity between the first automatable process and a second automatable process,
      the second automatable process being associated with a second preliminary automation plan; and
   determine the first preliminary automation plan based on the second preliminary automation plan and based on the measure of similarity.
14. The computer-readable medium of item 8, where the one or more instructions, when executed by the one or more processors, further cause the one or more processors to:
   determine a first step time associated with the one or more automatable steps, the first step time being a time required to perform the one or more automatable steps without automation;
   determine a second step time associated with the one or more automatable steps, the second step time being a time required to perform the one or more
   automatable steps with automation; and
   where the one or more instructions, that cause the one or more processors to determine the preliminary automation plan, further cause the one or more processors to:
      determine the preliminary automation plan based on comparing the first step time and the second step time.
15. A method, comprising:
   obtaining, by one or more devices, process information that describes an automatable process,
      the process information describing at least one of:
         a step of the automatable process,
         a stage of the automatable process,
         an input of the automatable process, or
         an output of the automatable process;
   generating, by the one or more devices, a process map based on the process information, the process map describing the process information;
   determining, by the one or more devices, a preliminary automation plan to provide an automation service based on the process map,
      the preliminary automation plan indicating one or more automatable steps of the automatable process;
   determining, by the one or more devices, an implementation plan based on the preliminary automation plan,
      the implementation plan describing a method of implementing the automation service based on the preliminary automation plan;
   outputting, by the one or more devices, the implementation plan to permit the automation service to be delivered.
16. The method of item 15, further comprising:
   determining a final automation plan, based on the preliminary automation plan, to provide the automation service,
      the final automation plan being determined based on a cost associated with the preliminary automation plan, and
      the final automation plan being determined based on the one or more automatable steps.
17. The method of item 15, where the implementation plan is a preliminary implementation plan; and
   where the method further comprises:
   determining a final implementation plan to implement the preliminary automation plan,
      the final implementation plan being determined based on the preliminary automation plan and based on the preliminary implementation plan, and
      the final implementation plan describing a work plan, a deliverable responsibility matrix, and/or a test schedule; and
   providing the final implementation plan.
18. The method of item 15, further comprising:
   receiving at least two of a functional requirement, a non-functional requirement, or a security requirement related to the automatable process;
   determining a functional specification based on the at least two of the functional requirement, the non-functional requirement, or the security requirement,
      the functional specification describing the automation service based on at least two of the functional requirement, the non-functional requirement, or the security requirement; and
   where determining the implementation plan further comprises:
      determining the implementation plan based on the functional specification.
19. The method of item 15, where determining the preliminary automation plan further comprises:
   receiving a plurality of alternative preliminary automation plans; and
   selecting, from the plurality of alternative preliminary automation plans, the preliminary automation plan,
      the preliminary automation plan being selected based on a cost associated with each alternative preliminary implementation plan of the plurality of alternative preliminary implementation plans.
20. The method of item 15, further comprising:
   causing execution of the automation service by an automation device based on outputting the implantation plan.

## Claims

1. A system, comprising:
one or more devices to:
receive process information that describes an automatable process, the process information describing at least one of:
a step of the automatable process,
a stage of the automatable process,
an input of the automatable process, or
an output of the automatable process;
determine a process map based on the process information, the process map describing the process information;
determine a preliminary automation plan to provide an automation service based on the process map,
the preliminary automation plan indicating one or more automatable steps of the automatable process;
determine an implementation plan based on the preliminary automation plan, the implementation plan describing a method of implementing the automation service based on the preliminary automation plan;
provide the implementation plan and the preliminary automation plan to permit the automation service to be delivered; and
cause execution of the automation service by an automation device based on providing the implementation plan and the preliminary automation plan.

2. The system of claim 1, where the one or more devices are further to:
determine a final automation plan, based on the preliminary automation plan, to provide the automation service,
the final automation plan being determined based on a cost associated with the preliminary automation plan, and
the final automation plan being determined based on the one or more automatable steps.

3. The system of claim 2, where the implementation plan is a preliminary implementation plan; and
where the one or more devices are further to:
determine a final implementation plan, based on the final automation plan, to implement the final automation plan,
the final implementation plan describing a work plan, a deliverable responsibility matrix, and/or a test schedule; and
provide the final implementation plan.

4. The system of any of the preceding claims, where the one or more devices are further to:
determine a functional requirement, a non-functional requirement, and a security requirement related to the automatable process; and
where the one or more devices, when determining the implementation plan, are further to:
determine the implementation plan based on the functional requirement, the non-functional requirement, and the security requirement.

5. The system of claim 4, where the one or more devices are further to:
determine a functional specification based on the functional requirement, the non-functional requirement, and the security requirement,
the functional specification describing the automation service based on the functional requirement, the non-functional requirement, and the security requirement; and where the one or more devices, when determining the implementation plan, are further to:
determine the implementation plan based on the functional specification.

6. The system of any of the preceding claims, where the preliminary automation plan is a first preliminary automation plan; and
where the automatable process is a first automatable process; and
where the one or more devices, when determining the preliminary automation plan, are further to:
determine that the first automatable process is similar to a second automatable process,
the second automatable process being associated with a second preliminary automation plan; and
determine the first preliminary automation plan based on the second preliminary automation plan.

7. The system of any of the preceding claims, where the one or more devices are further to:
determine a first cost associated with the one or more automatable steps, the first cost being a cost of performing the one or more automatable steps without automation;
determine a second cost associated with the one or more automatable steps, the second cost being a cost of performing the one or more automatable steps with automation; and
where the one or more devices, when determining the preliminary automation plan, are further to:
determine the preliminary automation plan based on comparing the first cost and the second cost.

8. A method, comprising:
obtaining, by one or more devices, process information that describes an automatable process,
the process information describing at least one of:
a step of the automatable process,
a stage of the automatable process,
an input of the automatable process, or
an output of the automatable process;
generating, by the one or more devices, a process map based on the process information, the process map describing the process information;
determining, by the one or more devices, a preliminary automation plan to provide an automation service based on the process map,
the preliminary automation plan indicating one or more automatable steps of the automatable process;
determining, by the one or more devices, an implementation plan based on the preliminary automation plan,
the implementation plan describing a method of implementing the automation service based on the preliminary automation plan;
outputting, by the one or more devices, the implementation plan to permit the automation service to be delivered; and
causing, by the one or more devices, execution of the automation service by an automation device based on outputting the implantation plan.

9. The method of claim 8, further comprising:
determining a final automation plan, based on the preliminary automation plan, to provide the automation service,
the final automation plan being determined based on a cost associated with the preliminary automation plan, and
the final automation plan being determined based on the one or more automatable steps.

10. The method of any one of claims 8-9, where the implementation plan is a preliminary implementation plan; and
where the method further comprises:
determining a final implementation plan to implement the preliminary automation plan,
the final implementation plan being determined based on the preliminary automation plan and based on the preliminary implementation plan, and
the final implementation plan describing a work plan, a deliverable responsibility matrix, and/or a test schedule; and
providing the final implementation plan.

11. The method of any one of claims 8-10, further comprising:
receiving at least two of a functional requirement, a non-functional requirement, or a security requirement related to the automatable process;
determining a functional specification based on the at least two of the functional requirement, the non-functional requirement, or the security requirement,
the functional specification describing the automation service based on at least two of the functional requirement, the non-functional requirement, or the security requirement; and
where determining the implementation plan further comprises:
determining the implementation plan based on the functional specification.

12. The method of any one of claims 8-11, where determining the preliminary automation plan further comprises:
receiving a plurality of alternative preliminary automation plans; and
selecting, from the plurality of alternative preliminary automation plans, the preliminary automation plan,
the preliminary automation plan being selected based on a cost associated with each alternative preliminary implementation plan of the plurality of alternative preliminary implementation plans.

13. The method of any one of claims 8-12, further comprising:
receiving an information storage preference,
the information storage preference indicating a preference to store information securely; and
configuring a device based on the information storage preference,
the device being configured to store, securely, information related to the automation process.

14. A computer program product comprising machine executable instructions residing on non-transitory computer readable media, which, when loaded and executed by a processor, cause the processor to perform operations according to the method of any one of claims 8-13.

15. A device configured to perform operations according to any one of claims 8-13.
